# EUROPEAN PATENT APPLICATION

(11) **EP 3 171 268 A1**
(43) Date of publication of application: **24.05.2017**
(21) Application number: 16205901.8
(22) Date of filing: 14.04.2010
(51) Int. Cl.: G06F 9/445

(54) **SYSTEMS AND METHODS FOR AUTOMATICALLY ENABLING AND DISABLING APPLICATIONS AND WIDGETS WITH A COMPUTING DEVICE BASED ON COMPATIBILITY AND/OR USER PREFERENCE**

(30) Priority: 14.04.2009 US 169289 P; 09.04.2010 US 757516
(62) Divisional of application: 10717342.9
(71) Applicant: QUALCOMM Incorporated, San Diego CA 92121-1714 (US)
(72) Inventor: BARBONI, Michael P., San Diego, CA California 92121-1714 (US); YAMAKAWA, Devender Akira, San Diego, CA California 92121-1714 (US)
(74) Representative: Dunlop, Hugh Christopher

(57) **Abstract**

An application management server may automatically disable applications or widgets that are incompatible with a user's computing device, and automatically re-enable such applications or widgets when the user's computing device is compatible. Auto-disabled applications may be tracked in memory of a server by setting an auto-disabled status indication associated with the disabled application or widget. If an auto-disabled application or widget is upgraded or the user swaps computing devices, thereby resolving the incompatibility, the server may auto-enable such applications and widgets that were previously auto-disabled so that they may be downloaded to or used from the user's computing device. The server may recognize when a software upgrade resolves an incompatibility and prompt a computing device to initiate a synchronization process to receive the auto-enabled application or widget to the computing device or to the user's application server-based locker or profile.

## Description

### CLAIM OF PRIORITY UNDER 35 U.S.C. §119

The present Application for Patent claims priority to Provisional Application No. 61/169,289 entitled SYSTEMS AND METHODS FOR AUTOMATICALLY ENABLING AND DISABLING APPLICATIONS AND WIDGETS WITH A COMPUTING DEVICE BASED ON COMPATIBILITY AND/OR USER PREFERENCE filed April 14, 2009, and assigned to the assignee hereof and hereby expressly incorporated by reference herein.

### BACKGROUND

The present disclosure generally relates to systems for managing software on client devices, and more particularly to methods for automatically enabling and disabling software based on compatibility and preference.

The ever expanding computing power and popularity of cellular telephones and other mobile electronic devices have spurred an industry of software developers and applications retailers focused on enhancing the mobile device user experience. A number of online resources are now available for downloading or using applications with mobile devices. For example, users can now download or use over-the-air applications or widgets (which are processes or functionality which run within an application, such as a client or server application) from a variety of online application vendors. While convenient and useful, downloading mobile device applications or widgets can lead to confusion and frustration. Many applications and widgets are compatible with some but not all mobile devices, and compatibility remains a moving target as developers upgrade and expand their software products. Users are unlikely to appreciate software compatibility issues, especially when they have obtained a newer model device and can no longer use a favored application or widget. The diversity of mobile device models in use and entering the marketplace every day combined with the thousands of mobile device applications and widgets available for download mean that compatibility issues can be a major issue for users, as well as those who offer applications and widgets for download. If the incompatibility problem goes unresolved, the user frustration that results from downloading an application that is incompatible with one's mobile device or switching mobile devices and having to purchase a new library of different applications and widgets could limit the market success of mobile device applications and the businesses that make them available.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect, a method for managing software loaded in or run from a computing device includes recognizing a user and the computing device, accessing a list of user-enabled software from a database of user software profiles, determining if a software product is compatible with the computing device, and automatically disabling the software product when the software product is determined to be incompatible with the computing device.

In another aspect, a server for managing software loaded on a computing device includes a processor, a network interface coupled to the processor and configured to enable the processor to communicate with an external network, and memory coupled to the processor, in which the processor is configured with processor-executable instructions to perform processes including recognizing a user and the computing device, accessing a list of user-enabled software from a database of user software profiles stored in memory, determining if a software product is compatible with the computing device, and automatically disabling the software product when the software product is determined to be incompatible with the computing device.

In another aspect, a server for managing software loaded on a computing device includes a means for recognizing a user and the computing device, a means for accessing a list of user-enabled software from a database of user software profiles, a means for determining if a software product is compatible with the computing device, and a means for automatically disabling the software product when the software product is determined to be incompatible with the computing device.

In a further aspect, a computer program product includes a computer-readable medium that includes at least one instruction for recognizing a user and the computing device, at least one instruction for accessing a list of user-enabled software from a database of user software profiles, at least one instruction for determining if a software product is compatible with the computing device, and at least one instruction for automatically disabling the software product when the software product is determined to be incompatible with the computing device.

In a further aspect, a method for maintaining software to a computing device includes receiving a list of one or more active and compatible applications or widgets compatible with the computing device from a server, automatically comparing the received list of one or more active and compatible applications or widgets to one or more applications or widgets currently installed on the computing device, automatically transmitting to the server a request to download, or enable within a user's locker or profile, one or more listed but not loaded active and compatible applications or widgets, receiving the one or more requested active and compatible applications or widgets, and automatically deleting currently installed applications or widgets not included in the received list of one or more active and compatible applications or widgets.

In a further aspect, a computing device includes a processor, a memory coupled to the processor, and a transceiver coupled to the processor, the transceiver configured to establish a communication link with a remote server, in which the processor is configured with processor-executable instructions to perform processes including receiving a list of one or more active and compatible applications or widgets compatible with the computing device from the remote server, comparing the received list of one or more active and compatible applications or widgets to one or more applications or widgets stored in the memory, transmitting to the server a request to download, or enable within a user's locker or profile, one or more active and compatible applications or widgets that are included in the received list but not stored in memory, receiving the one or more requested active and compatible applications or widgets, and deleting from the memory one or more applications or widgets not included in the received list of one or more active and compatible applications or widgets.

In a further aspect, a computing device includes a means for receiving a list of one or more active and compatible applications or widgets compatible with the computing device from a server, a means for comparing the received list of one or more active and compatible applications or widgets to one or more applications or widgets currently installed on, or available to run from, the computing device, a means for transmitting to the server a request to download, or enable within a user's locker or profile, one or more listed but not loaded active and compatible applications or widgets, a means for receiving the one or more requested active and compatible applications or widgets, and a means for deleting one or more currently installed applications or widgets not included in the received list of the one or more active and compatible applications or widgets.

In a further aspect, a computer program product includes a computer-readable storage medium including at least one instruction for receiving a list of one or more active and compatible applications or widgets compatible with the computing device from a server, at least one instruction for comparing the received list of one or more active and compatible applications or widgets to one or more applications or widgets currently installed on the computing device, at least one instruction for transmitting to the server a request to download, or enable within a user's locker or profile, one or more listed but not loaded active and compatible applications or widgets, at least one instruction for receiving the one or more requested active and compatible applications or widgets, and at least one instruction for deleting one or more currently installed applications or widgets not included in the received list of one or more active and compatible applications or widgets.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The accompanying drawings, which are incorporated herein and constitute part of this specification, illustrate exemplary aspects of the disclosure, and, together with the general description given above and the detailed description given below, serve to explain features of the disclosure.
FIG. 1 is a system block diagram of a communication system suitable for use with the various aspects, according to one implementation.
FIG. 2 is a process flow diagram of an aspect method for synchronizing a mobile device with an application management server, according to one aspect.
FIG. 3 is a process flow diagram of an aspect method that may be implemented within a server for determining whether an application or widget should be auto-disabled or auto-enabled, according to one aspect.
FIG. 4 is a process flow diagram of an aspect method by which a server may notify a mobile device or a mobile device user when a compatible variant of an application or widget is available for download or use, according to one aspect.
FIG. 5 is a process flow diagram of an aspect for displaying enabled, auto-disabled and user-disabled (parked) applications and widgets on an application management server website, according to one aspect.
FIG. 6 is a circuit block diagram of an example mobile device suitable for use with the various aspects using a wireless network, according to one aspect.
FIG. 7 is a circuit block diagram of an example personal computer suitable for use with the various aspects using a wired or wireless network, according to one aspect.
FIG. 8 is a circuit block diagram of an example server suitable for use with the one or more aspects.

### DETAILED DESCRIPTION

The various aspects will be described in detail with reference to the accompanying drawings. Wherever possible, the same reference numbers will be used throughout the drawings to refer to the same or like parts. References made to particular examples and implementations are for illustrative purposes, and are not intended to limit the scope of the disclosure or the claims.

In this description, the term "exemplary" is used herein to mean "serving as an example, instance, or illustration." Any implementation described herein as "exemplary" is not necessarily to be construed as preferred or advantageous over other implementations.

As used herein, the term "mobile device" is intended to encompass any form of programmable computing device as may exist or will be developed in the future which implements a communication module for wireless voice and data communications, including, for example, cellular telephones, personal television devices, personal data assistants (PDA's), palm-top computers, laptop and notebook computers, wireless electronic mail receivers, multimedia Internet enabled cellular telephones, and similar personal electronic devices which include a wireless communication module, processor, and memory. As used herein, the term "computing device" is intended to encompass any form of programmable device including mobile devices, personal computers, laptop computers, notebook computers, and the like. In one or more aspects, the mobile devices and computing devices are configured to communicate with a network, such as the Internet, via wired or wireless data networks, and therefore may also be referred to as "connected devices."

As used herein, the term "widget" refers to a process or functionality which runs within a client or server application on a computing device, while "application" refers to a stand alone process or functionality which runs within an operating system of a computing device. Applications and widgets may be referred to collectively herein as "software," and a particular application or widget may be referred to generally as a "software product."

Applications and widgets are referred to herein in terms of "titles" and "variants." "Title" refers to the particular application or widget, such as the game "Blocks." "Variant" refers to a particular implementation prepared for particular computing device models. Thus, a particular application or widget title may be associated with a plurality of variants compatible for a plurality of computing devices. An application or widget (i.e., title) is compatible with a computing device if there is a variant of that title which is compatible with the computing device.

Qualcomm Incorporated offers Plaza Mobile Internet™ solution which is a server-based system that interacts with clients installed on computing devices to enable users to customize and consume applications, widgets, and content across a variety of computing platforms. In the Plaza Mobile Internet™ solution example, users can select or purchase and then use or download applications or widgets (which are processes or functionality which run within an application, such as a client or server application) from a server which can be an application management server. In the Plaza Mobile Internet™ solution, a server keeps track of user purchased or selected applications or widgets, so when a user switches to a different computing device, the server can download the applications and widgets previously selected by the user to the new computing device. Widgets may be configured to operate within a client application which may exist either within the mobile device or on an application server. This enables users to take their applications, widgets, and content with them, giving consumers a simple way to mobilize their online lives. As part of the Plaza Mobile Internet™ solution, users can disable applications or widgets which, removes the applications or widgets from the computing device but stores them on a server for later re-enablement by the user. The Plaza Mobile Internet™ solution permits users to manage their applications and widgets via the Internet by accessing a webpage hosted by a server that displays the user's current enabled and disabled applications and widgets. Widgets may be configured to operate within a client application which may exist either within the mobile device or on an application server. Using such a website, users can disable an application or widget if they prefer to remove it from their computing device. The next time the user's computing device connects to the server, newly selected or purchased applications or widgets will be downloaded to the computing device and any user disabled applications or widgets will be deleted from the computing device.

The various aspects may be implemented on any application management server system which enables users to maintain a record of selected and/or downloaded applications or widgets that can be downloaded to a variety of computing devices to which a particular user may have access. Widgets may be configured to operate within a client application which may exist either within the mobile device or on an application server. In one aspect, the methods and systems described herein may be implemented on a server within the Plaza Mobile Internet™ solution offered by Qualcomm Incorporated. However, the claims are not limited to this specific implementation. To reflect the general applicability of the various aspects, the following descriptions refer to an "application management server" which, in one example, is a network accessible server that accomplishes application submission, management and delivery, including providing the functionality described herein, an example of which would be a server within the Plaza Mobile Internet™ solution.

An application management server, such as a server implemented within the Plaza Mobile Internet™ solution, may keep track of user selected or purchased applications and widgets so that when a user switches to a different computing device, a Plaza Mobile Internet™ client application can download to, or reference online versions of, the user's applications and widgets from the application management server. In the functionality enabled by the Plaza Mobile Internet™ solution, the user can disable and "park" applications and widgets on a server that the user does not want to be enabled and stored on the user's computing device, such as a mobile device. Enabled and disabled applications are tracked within a database that is referred to herein as a "profile/locker." Each user of the service has an individualized profile/locker that records information regarding the user's applications and widgets, as well as the user's preferences. Currently, the user may need to disable applications such as by visiting a website hosted by the system's application management server. Thus, if a user purchases or selects a particular application or widget title and discovers that it is not compatible with the user's computing device, the user may need to disable that title in order to park it on the application management server within the user's profile/locker.

The various aspects provide methods and systems which enable an application management server to automatically disable applications or widgets that are not compatible with a user's computing device, and automatically re-enable such applications or widgets when a user's computing device is compatible. Applications and widgets may become compatible with a user's computing device when the user switches computing devices or when a new variant of the application or widget is published, for example. When a user's computing device connects to the application management server, both the user and the computing device are recognized so that the user's profile/locker can be accessed and the appropriate compatibility can be determined. Such a recognition operation may or may not involve authenticating the computing device. A client application operating on the computing device or in the application management server may cooperate with the server to synchronize the applications and widgets loaded with the user's profile/locker. As part of this process, an application/widget compatibility check may be performed by the application management server. The applications or widgets determined to be incompatible with the user's computing device may be automatically disabled ("auto-disabled") by the server. As part of this process, incompatible applications or widgets may be deleted from the user's computing device or server runtime environment and tracked as auto-disabled on the application management server within the user's profile/locker so they may be enabled at a later time (similar to how users may disable selected applications or widgets). In order to remember applications or widgets that a user enabled but that have been auto-disabled by the application management server, an indication datum may be set or stored in a record associated with the auto-disabled application or widget. In an embodiment, such an auto-disabled indication may be stored in the form of an indication datum or a flag bit stored in a data record. Such an auto-disable indication enables the system to differentiate auto-disabled applications and widgets from user-disabled applications and widgets. Auto-disabled applications and widgets may be viewed on a webpage maintained by the application management server. If a publisher of an application or widget later releases a variant or version that resolves the incompatibility that prompted an auto-disable action (such as a version change or a new variant that adds support for a previously incompatible device), the application management server may automatically enable ("auto-enable") that application or widget so that it may be loaded onto the user's computing device. The application management server may recognize the auto-disabled indication as indicating that a user has previously indicated that the particular application or widget should be enabled, and therefore may notify the user when an application or widget is being auto-enabled. If a user swaps computing devices again (including back to an original computing device) and an auto-disabled application or widget is once again compatible with the new computing device, the application management server may auto-enable such applications and widgets so that they may be used with the user's new or previous computing device.

The various aspects may be implemented on a variety of computing devices coupled to application management servers via a variety of wired or wireless communication networks. Rather than describe all possible types of communication networks and computing devices, the example aspects described herein employ a wireless communication network linking mobile devices with an application management server. The aspect methods and the functionality of the application management server will be substantially the same when applied to wired communication networks and non-mobile computing devices. Accordingly, the scope of the claims should not be limited to wireless communication networks and mobile devices unless specifically so recited.

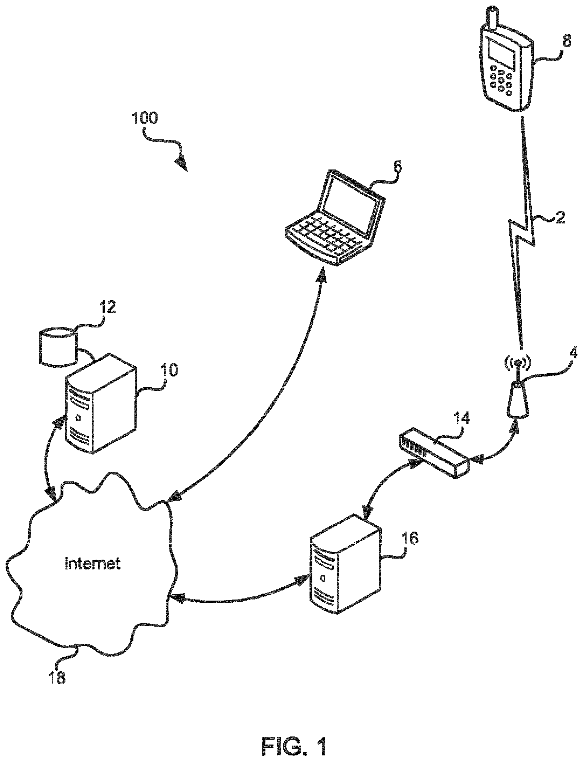

By way of example, FIG. 1 shows a wireless communication network 100 employing cellular data communication links suitable for use with the various aspects. Such a communication network 100 may include an application management server 10 coupled to the Internet 18. The application management server 10 may also be coupled to a database 12 on which may be stored various user profile/locker database records.

The communication network 100 may also include a personal computer (such as a laptop computer) 6 with a web browser capable of connecting to the Internet 18 and displaying webpages received from the application management server 10. The personal computer 6 may be connected to the Internet 18 via wired or wireless data links, allowing the personal computer 6 to communicate with the application management server 10.

The communication network 100 may further include mobile device 8 configured with a client application compatible with the server application running on the application management server 10. The mobile device 8 may be configured with an antenna and transceiver for transmitting and receiving cellular signals 2 from/to a cellular base station 4 that is a part of a cellular network which includes elements required to operate the network, such as a mobile switching center (MSC) 14. In operation, the MSC 14 is configured to route data calls and messages to and from the mobile device 8 via the base station 4 when the mobile device 8 is making and receiving cellular data calls. Using the cellular network, the mobile device 8 may access the application management server 10 via a network, such as the Internet 18. When connected to the application management server 10, the mobile device 8 can receive data messages, including the messages described herein, as well as receive application or widget downloads or information from an application or widget running in the server environment.

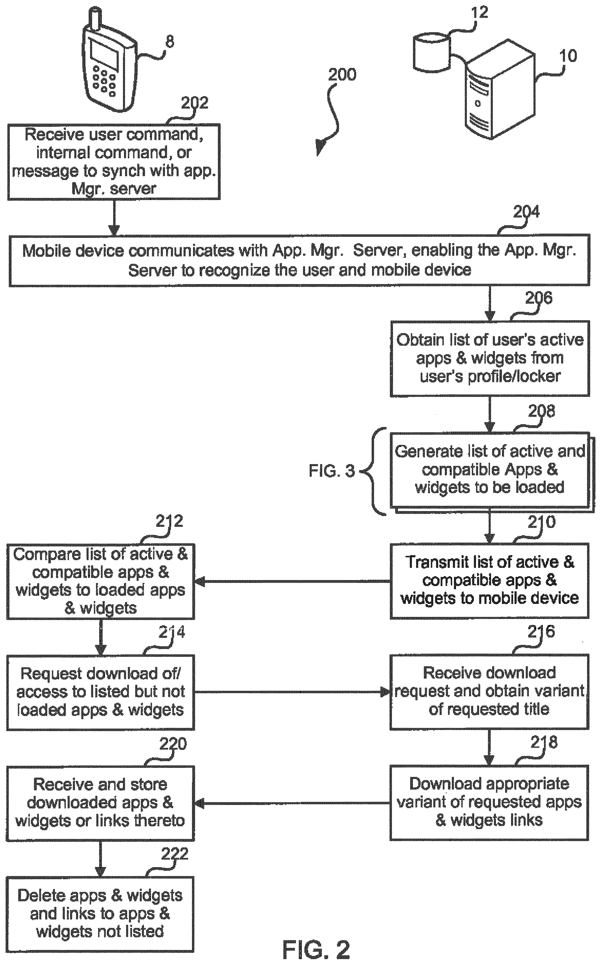

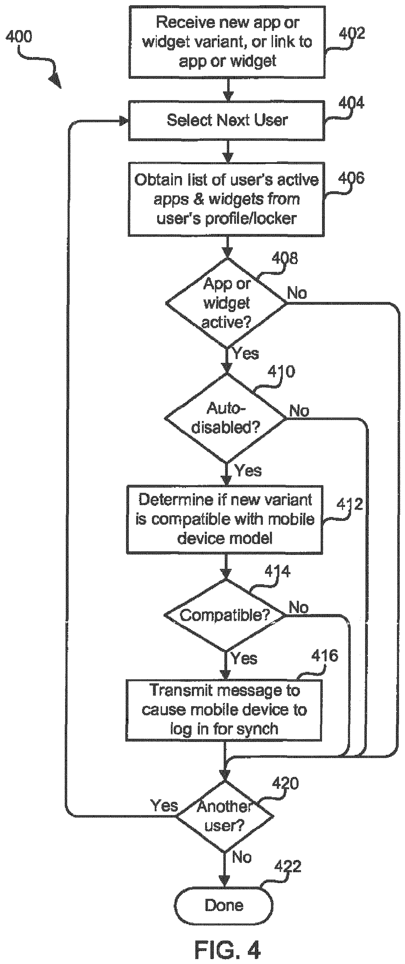

FIG. 2 illustrates an example aspect synchronization process 200 by which a mobile device 8 can cooperate with an application management server 10 to synchronize its applications and widgets with a user's enabled applications and widgets that are compatible with the mobile device. Such a synchronizing operation may begin when the user commands the mobile device 8 to synchronize with the application management server 10, such as by selecting a menu option to begin the synchronization process, or the mobile device processor automatically initiates the synchronization process, such as at a predetermined time or interval at block 202. Thus, synchronization of the mobile device 8 with the application management server 10 may occur whenever the user connects with the server, such as to manage applications or widgets, and periodically as may be scheduled in the mobile device 8. As part of this user command, the user may be prompted to enter identifying information. In alternative aspect described more fully below with reference to FIG. 4, the mobile device 8 may also be prompted to initiate the synchronization process by receiving a message from the application management server 10 at block 202.

The synchronization process 200 may begin at block 204 with the mobile device 8 communicating with the application management server 10. This process in block 204 enables the application management server 10 to recognize the user and the computing device, enabling it to locate user records and determine the compatibility of the particular computing device. If the user entered identifying information as part of block 202, that information may also be forwarded to the application management server 10 as part of the processes in block 204. The process in block 204 may not involve authenticating the mobile device 8 to the application management server 10. However, if the process in block 204 involves authentication of the mobile device 8, any of the various methods for authenticating computing devices, including mobile devices, to network accessible servers that are well known in the computing arts may be used for the processes involved in block 204. Such authentication methods may include transmitting a shared secret, such as a password or user/device identifier plus a password, transmitting a value that can be generated only using a shared encryption key, such as a hash generated from a known value (e.g., a challenge value or device identifier) using an encryption key known to the device and the server, a Challenge Handshake Authentication Protocol (CHAP) challenge and response exchange, etc.

Once the mobile device 8 has been authenticated to the application management server 10, at block 206, the server may obtain or access a database record, index, data table, or list of the mobile device user's enabled applications and widgets from the user's profile/locker which may be stored in a database 12. Such a database record, index, data table, or list may be any form of storable data that enables a computing device to identify or determine those applications and widgets associated with a particular user. For ease of reference such a database record, index, data table, or list are referred to herein and in the claims as a "list;" however, references to a "list" are not intended to limit the scope of the claims or the disclosure to a particular data structure or list structure. Further, a list may include zero, one, or a plurality of entries. In this process, the application management server 10 may use an identifier associated with the mobile device 8 to determine an identity of the user. Alternatively, the user may identify himself or herself to the application management server 10, such as by entering a user identifier (ID) and password (or other authentication credential, such as a biometric credential) that is communicated to the server as part of the authentication processes in block 204. As described above, the list of user's enabled applications and widgets stored within the user's profile/locker will reflect those applications or widgets that the user has selected or purchased and previously indicated should be enabled on the user's computing devices. Methods by which the user can designate applications or widgets to be enabled or disabled are well-known and include such methods implemented in Qualcomm^{®} Plaza Mobile Internet™ solution. Such methods may include touching or double clicking on a listing or icon in a user interface, entering a name of an application or widget in a user interface or pressing a button or virtual button linked to a particular application or widget.

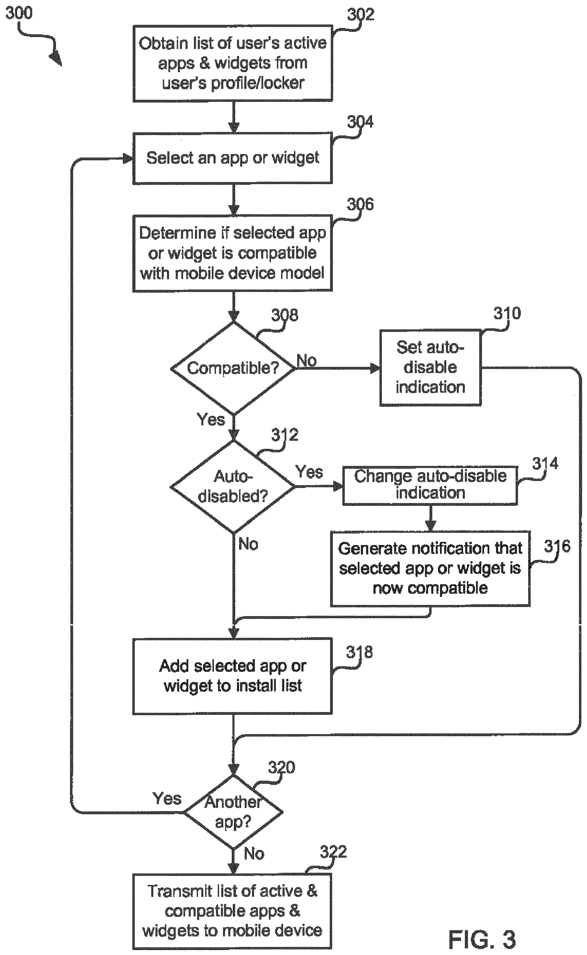

Using the user's list of enabled applications and widgets in combination with information regarding the compatibility of such applications and widgets with the user's mobile device 8, at block 208 the application management server may generate a list of enabled and compatible applications and widgets to be loaded onto the user's mobile device 8. An example method for generating such a list is described below with reference to FIG. 3. At block 210, the application management server 10 may then transmit the list of enabled and compatible applications and widgets to the mobile device 8. The list may be transmitted via the open communication link established in block 204, or via a new communication link or addressed message (e.g., electronic mail, short message service (SMS), etc.).

At block 212, the mobile device 8 receives the list of enabled and compatible applications and may compare the list to the applications and widgets already loaded in memory. At block 214, the mobile device 8 may generate and send a message to the application management server 10 requesting download of any listed applications and widgets that are not loaded in memory. This request may be transmitted via the open communication link established in block 204, or via a new communication link or addressed message (e.g., electronic mail, SMS, etc.). At block 216, the application management server may receive the download request and obtain the appropriate variant of the requested titles from memory, such as a database store 12. At block 218, the application management server 10 may then download the appropriate variant of each of the requested applications and widgets to the mobile device 8, or links to the requested applications and widgets that can be accessed via the server-based application runtime environment. Downloading of applications and widgets may be accomplished via the communication link established in block 204, or a new communication link. At block 220, the mobile device 8 receives the downloaded applications and widgets and stores them in memory. In some instantiations, while the knowledge of the applications or widgets selected or purchased may be required by the mobile device, the actual download of the application or widget may not be necessary where the application or widget executes within a server-based application runtime environment. In such instances, at block 220, the mobile device 8 may receive a link to the application for accessing it via server-based application runtime environment.

In addition to downloading applications, at block 222 the mobile device 8 may delete any applications and widgets stored in its memory or links to the applications and widgets in the server's runtime environment that are not included in the list of enabled and compatible applications transmitted by the application management server in block 210. Deleting applications stored in memory or links to applications that would be accessed via the server's runtime environment that are not included in the enabled and compatible list provided by the application management server 10 enables the server to configure the user's mobile device 8 to implement user disable selections, as well as ensure the mobile device 8 includes only those applications selected by or licensed to the user, if applicable. Thus, in one example, the deletion operation in block 222 will remove applications (or links to those applications via the server's runtime environment) that the user has indicated should be disabled and "parked" on the application management server 10. The deletion operation in block 222 also addresses the use case of when a user purchases a mobile device 8 that is loaded with software products (or links to applications via the server's runtime environment) for which the user does not possess a license, if applicable, since the device will delete (or delete access to) any applications or widgets not included on the list provided by the application management server in block 210. It should be noted that the process of deleting unlisted applications and widgets (block 222) may be performed at any time after the list is received by the mobile device 8 (thus, any time after receiving the list in block 212 illustrated in FIG. 2).

Once all listed applications and widgets (or links to applications and widgets via the server's runtime environment) have been downloaded and any loaded but not listed applications or widgets (or links to applications and widgets via the server's runtime environment) have been deleted, the mobile device 8 is synchronized with the user's profile stored on the application management server 10.

FIG. 3 illustrates an example method 300 by which an application management server 10 may generate a list of enabled and compatible applications and widgets to be loaded onto a user's computing device. As described above with reference to FIG. 2, at block 302 the application management server 10 may use a computing device ID or user ID to recall a user's profile/locker from a database 12. It should be noted that the use of the word "list" herein is not intended to be limiting and that the information obtained in block 302 may be in the form of a list, a table, a database record or a plurality of database records associated with a particular user or computing device. At block 304, the application management server may select a first application or widget from the obtained list, and determine if that particular application or widget is compatible with the user's mobile device model at block 306 and determination 308. This determination 308 may be accomplished, for example, by comparing the mobile device model number to a list of compatible devices associated with the particular application or widget title of variants of that title. Such a list of compatible devices may be provided by the publisher of that particular application or widget by way of submission to the application management server. Alternatively or in conjunction with identification of compatibility by the publisher, the application management server 10 may maintain a compatibility database that can be accessed using the selected application or widget and the user's mobile device model number, browser user agent string, or other identifier. Further, the process of determining compatibility is not limited to a table lookup process and other methods for determining application-to-device compatibility may be used.

If the selected application or widget is determined to be incompatible with the user's mobile device 8 (i.e., determination 308 = "No"), the application management server 10 may store an indication datum in memory or set an auto-disable indication within the user's profile/locker to indicate that the server has automatically disabled the particular application or widget based upon incompatibility at block 310. Since the application or widget is being auto-disabled, it will not be added to a list of enabled and compatible applications and widgets, so the application management server 10 may determine whether there is an another application or widget within the obtained list of user's enabled applications and widgets, determination 320, and if so, select the next application or widget by returning to block 304.

If the selected application or widget is determined to be compatible with the user's mobile device 8 (i.e., determination 308 = "Yes"), the application management server 10 may determine whether an auto-disable indication is stored (e.g., an auto-disable flag is set) for the particular application or widget at determination 312. If no auto-disable flag indication is stored for the application or widget (i.e., determination 312 = "No"), the application management server 10 may add the selected application or widget to the list of enabled and compatible applications and widgets that should be loaded on the user's mobile device 8 automatically without user's interaction based on the fact that the user previously requested the application to be enabled at block 318.

If an auto-disable indication is stored for the application or widget (i.e., determination 312 = "Yes"), the application management server 10 may change (e.g., reset or clear) the auto-disable indication at block 314 to indicate that the application or widget is not auto-disabled, since the server has already determined (in block 306 and determination 308) that there is a compatible variant of the application or widget available. Since an auto-disable indication is stored for the application or widget, this indicates that the user previously requested the application to be enabled but the application management server auto-disabled the application. Therefore, the application management server 10 may generate a notification or message to be sent to the mobile device 8 to inform the user that the selected application or widget is now available for use at block 316. Such a message may acknowledge that the application was previously auto-disabled due to compatibility issues, but that the compatibility issues have been resolved, for example. The application server may also add the selected application or widget to the list of enabled and compatible applications and widgets that should be loaded on the user's mobile device 8 at block 318.

Once the selected application or widget has been added to the install list, the application server 10 may determine whether there is another application or widget within the obtained list to the assessed, determination 320, and if so, return to block 304 to select the next application or widget. If all applications and widgets within the obtained list of user's enabled applications and widgets have been assessed (i.e., determination 320 = "No"), the application management server 10 may transmit the compiled list of enabled and compatible applications and widgets to the mobile device 8 at block 322, as described above with reference to FIG. 2.

It should be noted that the example method 300 described above with reference to FIG. 3 will automatically re-enable an auto-disabled application or widget (or links to auto-disabled applications and widgets in the server's runtime environment) when the incompatibility is resolved. As described above, an incompatibility between an application or widget title and a mobile device may be resolved by the publisher issuing a new variant that is compatible with that particular mobile device model. Also, if the user switches computing devices to one that is compatible with a previously auto-disabled application or widget, the example method 300 illustrated in FIG. 3 will automatically enable that application or widget. Thus, whenever a user synchronizes the user's computing device with the application management server 10, the application management server will automatically recognize resolved incompatibility situations, and may so notify the user at the time of synchronization.

While a primary method for synchronizing mobile devices 8 with the application management server 10 involves periodic and user-initiated synchronization sessions, in a further aspect, the application management server 10 may be configured to prompt a synchronization session when it recognizes that a software publisher releases will resolve an incompatibility that led to an auto-disable decision for particular users. FIG. 4 illustrates an example method 400 by which the application management server 10 may recognize that a user-enabled application or widget incompatibility has been resolved and prompt a user's mobile device 8 to initiate a synchronization process in order to receive the newly compatible application or widget. In method 400, at block 402, the application management server 10 may initiate this process when it receives a new variant for an application or widget title. This process may be initiated as part of adding a new variant to a database of applications and widgets, for example. At block 404, the application management server 10 may sequentially review the profile/locker for each user within its user database by selecting a next user. At block 406, the application management server 10 may obtain the user's list of user-enabled (i.e., active) applications and widgets from the user's profile/locker. Optional processes for obtaining such a list are described above with reference to FIG. 2. The application management server 10 may determine whether the updated application or widget is included within the user's list of enabled applications and widgets at determination 408. If the updated application or widget is not among the user's enabled applications and widgets (i.e., determination 408 = "No"), the application management server 10 may determine whether there is another user to be evaluated at determination 420, and if so, select the next user for evaluation by returning to block 404.

If the updated application or widget is included in the selected user's enabled applications and widgets (i.e., determination 408 = "Yes"), the application management server may determine whether the application or widget is auto-disabled at determination 410, such as by checking whether an indication of the auto-disable state of has been stored in memory for that particular application or widget (e.g., an auto-disable flag is set in memory). If the application or widget is not auto-disabled (i.e. determination 410 = "No"), this indicates that the application or widget is already loaded on or determined to be compatible with the user's mobile device 8, so the application management server 10 may determine whether there is another user to be evaluated at determination 420, and if so, select the next user for evaluation by returning to block 404.

If the application or widget is determined to be auto-disabled (i.e., determination 410 = "Yes"), this indicates that the application or widget has been auto-disabled for the selected user, so the application management server 10 may determine if the new variant is compatible with the user's mobile device mode at block 412 and determination 414. If the new variant is not compatible with the user's mobile device model (i.e., determination 414 = "No"), this indicates that the update has not resolved the incompatibility situation, in which case the application management server 10 may determine whether there is another user to be evaluated at determination 420, and if so, select the next user for evaluation by returning to block 404.

If the new variant is determined to be compatible with the user's mobile device model (i.e., determination 414 = "No"), this indicates that the incompatibility has been resolved by the software update, so the application management server 10 may transmit a message to the user's mobile device 8 to cause it to initiate a synchronization process at block 416. This synchronization process may be the same as that described above with reference to FIG. 2, or a process focused on auto-enabling the particular software product which may implement processes similar to that described above. Such a message may be any type of message that the server can address to a particular computing device that can include executable code that causes the computing device to automatically initiate the synchronization process. Also, the message may be any type of message that the server can address to a particular computing device that delivers a user-understandable message that prompts a user to initiate the synchronization process. For example, in the case of mobile devices, the message may be in the form of a SMS message, an e-mail message, a wireless application protocol (WAP) Push message, a message within a Plaza Mobile Internet™ server synchronization protocol (in that example aspect), or similar type message. Other known methods may also be used to prompt a computing device to initiate the synchronization process including timer-based or user-initiated methods of prompting a synchronization to occur. Once such a message has been transmitted, the application management server 10 may determine whether there is another user to be evaluated at determination 420, and if so, select the next user for evaluation by returning to block 404. Once all users have been evaluated (i.e., determination 420 = "No"), the process may terminate at block 422.

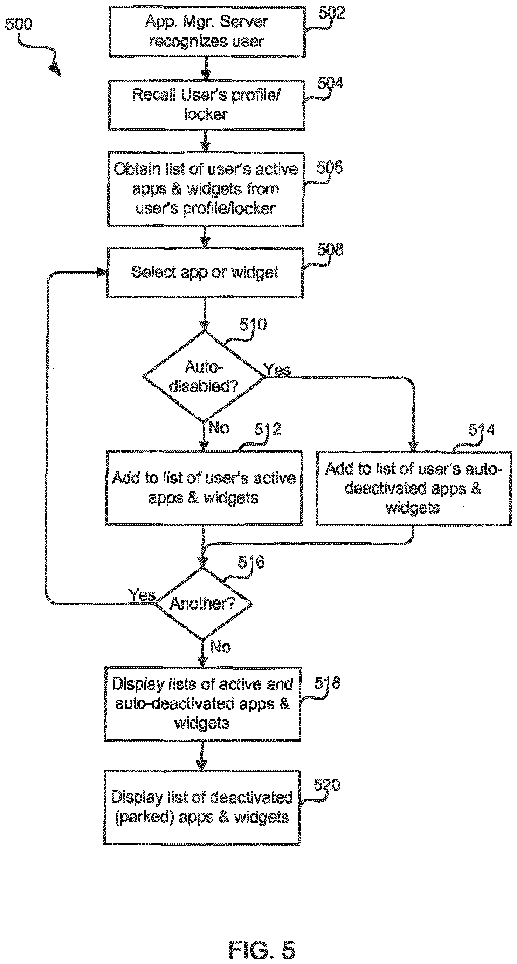

Storing an auto-disabled indication datum or setting an auto-disable flag in user profiles/locker data records may also be useful in generating webpages for communicating with users. For example, FIG. 5 illustrates an example aspect method 500 for generating a user profile webpage identifying applications and widgets that are user-enabled and compatible, user-enabled but auto-disabled, and user-disabled (i.e., parked). To initiate the process, a user may be recognized by the application management server at block 502, such as by entering a user name and password, a user name and submitting to a biometric scan, or other known method of recognizing the user. Upon recognizing the user login information, the application management server 10 may recall the user's profile/locker from a database at block 504, and obtain a list of the user's enabled applications and widgets at block 506. Optional processes for determining the user's enabled applications and widgets are described above with reference to FIG. 2. In order to distinguish auto-disabled applications and widgets, the application management server 10 may select a particular application or widget at block 508, and determine whether its auto-disable indication datum or flag has been set at determination 510. If an auto-disable indication has not been saved (i.e., determination 510 = "No"), the selected application or widget may be added to a list of the user's enabled and compatible applications and widgets at block 512. If an auto-disable indication has been saved (i.e., determination 510 = "Yes"), the selected application or widget may be added to a list of the user's enabled but auto-disabled applications and widgets at block 514, and further prevent enablement on incompatible devices. The application management server 10 may then determine whether there is another application or widget within the obtained list at determination 516, and if so, select the next application or widget for evaluation by returning to block 508. Once all applications and widgets in the obtained list have been evaluated (i.e., determination 516 = "No"), the application management server may generate and transmit the HTML code sufficient to cause a display of the list of user-enabled and compatible applications and widgets, and of the list of user-enabled but auto-disabled applications and widgets at block 518. The application management server 10 may also generate and transmit the HTML code sufficient to cause a display of the list of user-disabled applications and widgets at block 520.

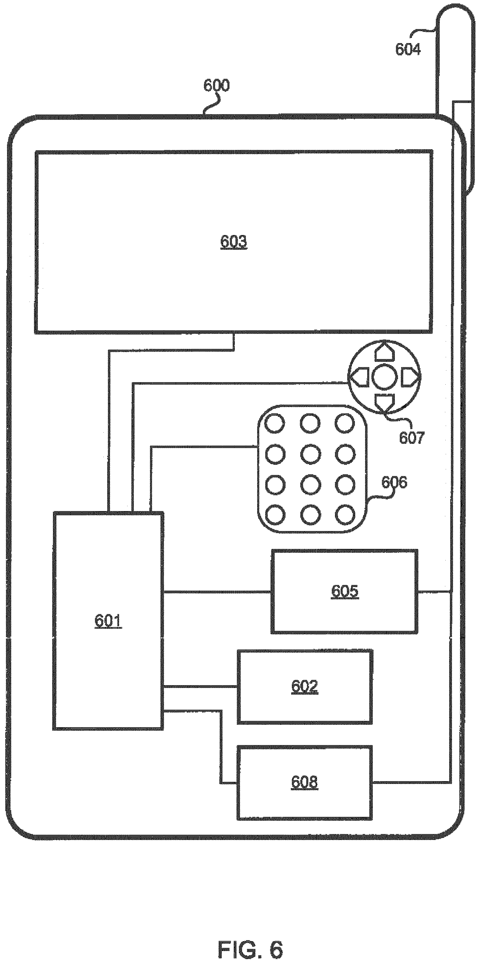

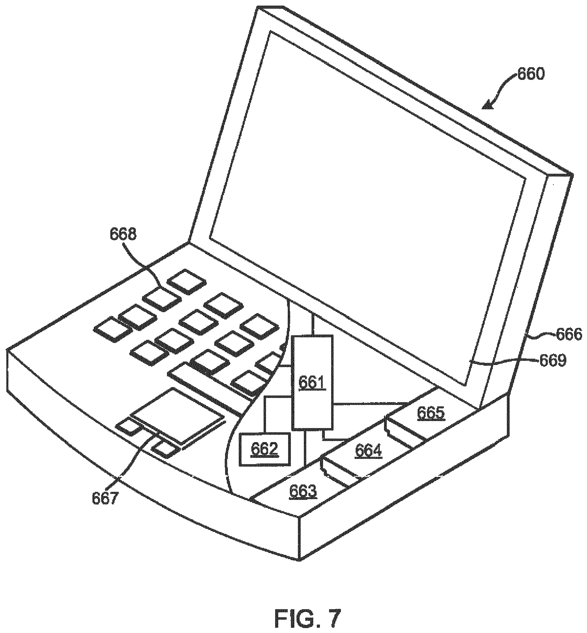

The aspects described above may be implemented on any of a variety of computing devices, including personal computers, which may communicate with the application management server 10 via a wired network, and mobile devices, which may communicate with the application management server 10 via a wired, wireless cellular or non-cellular wireless network. An example mobile device is illustrated in FIG. 6, and an example personal computer is illustrated in FIG. 7.

The aspects described above may be implemented on a mobile device, such as, for example, cellular telephones, personal data assistants (PDA), mobile web access devices, and other processor-equipped devices that may be developed in the future configured to communicate with the external networks, such as via a wireless data link. Typically, such portable computing devices will have in common the components illustrated in FIG. 6. For example, the portable computing devices 600 may include a processor 601 coupled to internal memory 602 and to a display 603. Additionally, the portable computing device 600 may have an antenna 604 for sending and receiving electromagnetic radiation that is connected to a wireless data link and/or cellular telephone transceiver 605 coupled to the processor 601. Portable computing devices 600 also may include a key pad 606 or miniature keyboard and menu selection buttons or rocker switches 607 for receiving user inputs, as well as a speaker 609 for generating an audio output.

A number of the aspects described above may also be implemented with any of a variety of computing devices, such as a notebook computer 660 illustrated in FIG. 7. Such a notebook computer 660 typically includes a housing 666 that contains a processor 661 coupled to volatile memory 662 and a large capacity nonvolatile memory, such as a disk drive 663. The computer 660 may also include a floppy disc drive 664 and a compact disc (CD) drive 665 coupled to the processor 661. The computer housing 666 may also include a touchpad 667, keyboard 668, and the display 669.

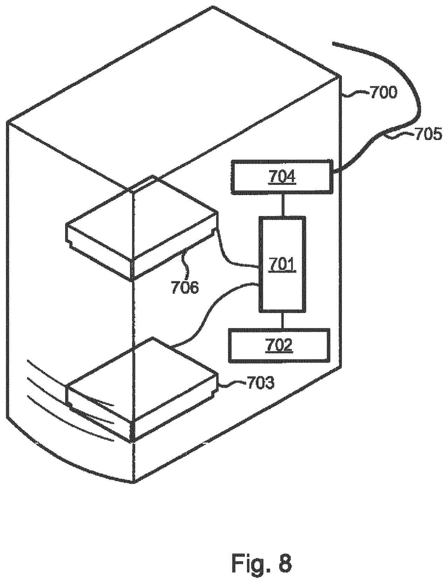

The aspects described above may also be implemented with any of a variety of server devices, such as the server 700 illustrated in FIG. 8. Such a server 700 typically includes a processor 701 coupled to volatile memory 702 and a large capacity nonvolatile memory, such as a hard disk drive 703. The server 700 may also include a floppy disc drive 704 and a compact disc (CD) drive 705 coupled to the processor 701. A server 700 also includes a network interface 704 for coupling the processor 701 to an external network 705, such as the Internet or a network coupled to the Internet.

The processors 601, 661. 701 may be any programmable microprocessor, microcomputer or multiple processor chip or chips that can be configured by software instructions (applications) to perform a variety of functions, including the functions of the various aspects described above. In some computing devices 600, 660 multiple processors 601, 661 may be provided, such as one processor dedicated to managing voice and data communications, and one processor dedicated to running other applications.

The various aspects may be implemented by a computer processor 401, 661 executing software instructions configured to implement one or more of the described methods. Typically, software applications, such as a client application implementing processes described above, may be stored in the internal memory 602, 662, 702 before they are accessed and loaded into the processor 601, 661, 701. Such software instructions may be stored in memory 602, 662, 702 as separate applications, or as compiled software implementing an aspect method. Further, the software instructions and databases may be stored on any form of tangible processor-readable memory, including: a random access memory 602, 662, 702 hard disc memory 663, 703, a floppy disk (readable in a floppy disc drive 664, 704), a compact disc (readable in a CD drive 665, 705), electrically erasable/programmable read only memory (EEPROM), read only memory (such as FLASH memory), and/or a memory module (not shown) plugged into the computing device 600, 660, 700 such as an external memory chip or a USB-connectable external memory (e.g., a "flash drive") plugged into a USB network port. For the purposes of this description, the term memory refers to all memory accessible by the processor 601, 661, 701 including internal memory 602, 662, 702 and memory within the processor 601, 662, 702 itself.

The foregoing method descriptions and the process flow diagrams are provided merely as illustrative examples and are not intended to require or imply that the processes of the various aspects must be performed in the order presented. As will be appreciated by one of skill in the art the order of blocks and processes in the foregoing aspects may be performed in any order. Words such as "thereafter," "then," "next," etc. are not intended to limit the order of the processes; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm processes described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some processes or methods may be performed by circuitry that is specific to a given function.

In one or more exemplary aspects, the functions described may be implemented in hardware, software, firmware, or any combination thereof. If implemented in software, the functions may be stored on or transmitted over as one or more instructions or code on a computer-readable medium. The processes of a method or algorithm disclosed herein may be embodied in a processor-executable software module executed which may reside on a tangible, non-transitory computer-readable medium. Tangible, non-transitory computer-readable media includes any available non-transitory storage media that may be accessed by a computer. By way of example, and not limitation, such tangible, non-transitory computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of tangible, non-transitory computer-readable media. Additionally, the operations of a method or algorithm may reside as one or any combination or set of codes and/or instructions on a tangible, non-transitory machine-readable medium and/or tangible, non-transitory computer-readable medium, which may be incorporated into a computer program product.

The preceding description of the disclosed aspects is provided to enable any person skilled in the art to make or use the present disclosure. Various modifications to these aspects will be readily apparent to those skilled in the art, and the generic principles defined herein may be applied to other aspects without departing from the spirit or scope of the disclosure. Thus, the present disclosure is not intended to be limited to the aspects shown herein but is to be accorded the widest scope consistent with the following claims and the principles and novel features disclosed herein.

### EMBODIMENTS

A method for managing software loaded in or run from a computing device, comprising: recognizing a user and the computing device; accessing a list of user-enabled software from a database of user software profiles; determining if a software product is compatible with the computing device; and automatically disabling the software product when the software product is determined to be incompatible with the computing device.

The method may further comprise automatically disabling the software product by: storing an auto-disable status indication in a data record associated with the software product; and excluding the software product from a list of software to be loaded in or run from the computing device that is transmitted to the computing device. The method may further comprise: determining if the software product was previously automatically disabled; and automatically re-enabling the software product when the software product is determined to be compatible with the computing device and to have been previously automatically disabled. The method may further comprise automatically re-enabling the software product by: changing an auto-disable status indication in a data record associated with the software product; and including the software product in a list of software to be loaded in or run from the computing device that is transmitted to the computing device. The method may further comprise: recognizing when the software product becomes compatible with the computing device; and prompting the computing device to establish a communication session to receive the list of software to be loaded in or run from the computing device that is transmitted to the computing device. The method may further comprise: notifying a user of the computing device when the software product is automatically re-enabled. The method, wherein the software product may be a widget configured to operate within a client application which may exist either within the mobile device or on an application server. The method, wherein the software product may be an application. A server for managing software loaded on a computing device, comprising: a processor; a network interface coupled to the processor and configured to enable the processor to communicate with an external network; and memory coupled to the processor, wherein the processor is configured with processor-executable instructions to perform processes comprising: recognizing a user and the computing device; accessing a list of user-enabled software from a database of user software profiles stored in memory; determining if a software product is compatible with the computing device; and automatically disabling the software product when the software product is determined to be incompatible with the computing device.

The server, wherein the processor may be configured with processor-executable instructions such that automatically disabling the software product comprises: storing an auto-disable status indication in a data record associated with the software product; and excluding the software product from a list of software to be loaded in the computing device that is transmitted to the computing device. The server, wherein the processor may be configured with processor-executable instructions to perform processes further comprising: determining if the software product was previously automatically disabled; and automatically re-enabling the software product when the software product is determined to be compatible with the computing device and to have been previously automatically disabled. The server, wherein the processor may be configured with processor-executable instructions such that automatically re-enabling the software product comprises: changing an auto-disable status indication in a data record associated with the software product; and including the software product in a list of software to be loaded in or run from the computing device that is transmitted to the computing device. The server, wherein the processor may be configured with processor-executable instructions to perform processes further comprising: recognizing when the software product becomes compatible with the computing device; and prompting the computing device to establish a communication session to receive the list of software to be loaded in or run from the computing device that is transmitted to the computing device. The server, wherein the processor may be configured with processor-executable instructions to perform processes further comprising: notifying a user of the computing device when the software product is automatically re-enabled. The server, wherein the software product may be a widget configured to operate within a client application which may exist either within the mobile device or within the application server. The server, wherein the software product may be an application.

A server for managing software loaded on a computing device, comprising: means for recognizing a user and the computing device; means for accessing a list of user-enabled software from a database of user software profiles; means for determining if a software product is compatible with the computing device; and means for automatically disabling the software product when the software product is determined to be incompatible with the computing device.

The server, wherein the means for automatically disabling the software product may comprise: means for storing an auto-disable status indication in a data record associated with the software product; and means for excluding the software product from a list of software to be loaded in or run from the computing device that is transmitted to the computing device. The server may further comprise means for determining if the software product was previously automatically disabled; and means for automatically re-enabling the software product when the software product is determined to be compatible with the computing device and to have been previously automatically disabled. The server, wherein the means for automatically re-enabling the software product may comprise: means for changing an auto-disable status indication in a data record associated with the software product; and means for including the software product in a list of software to be loaded in or run from the computing device that is transmitted to the computing device. The server may further comprise: means for recognizing when the software product becomes compatible with the computing device; and means for prompting the computing device to establish a communication session to receive the list of software to be loaded in or run from the computing device that is transmitted to the computing device. The server may further comprise: means for notifying a user of the computing device when the software product is automatically re-enabled. The server, wherein the software product may be a widget configured to operate within a client application which may exist either within the mobile device or within the application server. The server, wherein the software product may be an application.

A computer program product, comprising: a computer-readable medium, comprising: at least one instruction for recognizing a user and the computing device; at least one instruction for accessing a list of user-enabled software from a database of user software profiles; at least one instruction for determining if a software product is compatible with the computing device; and at least one instruction for automatically disabling the software product when the software product is determined to be incompatible with the computing device.

The computer program product, wherein the at least one instruction for automatically disabling the software product may comprise: at least one instruction for storing an auto-disable status indication in a data record associated with the software product; and at least one instruction for excluding the software product from a list of software to be loaded in or run from the computing device that is transmitted to the computing device. The computer program product, wherein the computer-readable medium may further comprise: at least one instruction for determining if the software product was previously automatically disabled; and at least one instruction for automatically re-enabling the software product when the software product is determined to be compatible with the computing device and to have been previously automatically disabled. The computer program product, wherein the at least one instruction for automatically re-enabling the software product may comprise: at least one instruction for changing an auto-disable status indication in a data record associated with the software product; and at least one instruction for including the software product in a list of software to be loaded in or run from the computing device that is transmitted to the computing device. The computer program product, wherein the computer-readable medium may further comprise: at least one instruction for recognizing when the software product becomes compatible with the computing device; and at least one instruction for prompting the computing device to establish a communication session to receive the list of software to be loaded in or run from the computing device that is transmitted to the computing device. The computer program product, wherein the computer-readable medium may further comprise: at least one instruction for notifying a user of the computing device when the software product is automatically re-enabled. The computer program product, wherein the software product may be a widget configured to operate within a client application which may exist either within the mobile device or within the application server. The computer program product, wherein the software product may be an application.

## Claims

1. A method (200) for maintaining software to a computing device, the method comprising at the computing device:
receiving a list of a plurality of active and compatible applications or widgets compatible with the computing device from a server;
automatically comparing (212) the received list of the plurality of active and compatible applications or widgets to one or more applications or widgets currently installed on the computing device;
automatically transmitting (214) to the server a request to download, or enable within a user's locker or profile, one or more listed but not loaded active and compatible applications or widgets;
receiving (220) the one or more requested active and compatible applications or widgets; and
automatically deleting (222) currently installed applications or widgets not included in the received list.

2. The method of claim 1, wherein communications between the computing device and the server are accomplished via a wireless communication link.

3. The method of claim 1, wherein transmitting to the server the request to download, or enable within the user's locker or profile, the one or more listed but not loaded active and compatible applications or widgets comprises transmitting the request via a new communication link or addressed message such as an electronic mail or short message service, SMS, message.

4. The method of claim 2, wherein receiving the list of one or more active and compatible applications or widgets compatible with the computing device from the server comprises receiving the list via the established wireless communication link.

5. The method of claim 2, wherein transmitting to the server the request to download, or enable within the user's locker or profile, the one or more listed but not loaded active and compatible applications or widgets comprises transmitting the request via the established wireless communication link.

6. The method of claim 2, wherein receiving the one or more requested active and compatible applications or widgets comprises receiving the requested active and compatible applications or widgets via the established wireless communication link.

7. A computing device (600), comprising:
a processor (601);
a memory (602) coupled to the processor (601); and
a transceiver (605) coupled to the processor (601), the transceiver (605) configured to establish a communication link with a remote server,
wherein the processor (601) is configured with processor-executable instructions to perform processes comprising:
receiving a list of a plurality of active and compatible applications or widgets compatible with the computing device from the remote server;
comparing the received list of the plurality of active and compatible applications or widgets to one or more applications or widgets stored in the memory;
transmitting to the server a request to download, or enable within a user's locker or profile, one or more active and compatible applications or widgets that are included in the received list but not stored in memory;
receiving the one or more requested active and compatible applications or widgets; and
deleting from the memory one or more applications or widgets not included in the received list.

8. A computing device (600), comprising:
means for receiving (605) a list of a plurality of active and compatible applications or widgets compatible with the computing device from a server;
means for comparing (601) the received list of the plurality of active and compatible applications or widgets to one or more applications or widgets currently installed on, or available to run from, the computing device;
means for transmitting (605) to the server a request to download, or enable within a user's locker or profile, one or more listed but not loaded active and compatible applications or widgets;
means for receiving (605) the one or more requested active and compatible applications or widgets; and
means for deleting (601) one or more currently installed applications or widgets not included in the received list.

9. A computer program product for a computing device, comprising:
a computer-readable storage medium comprising:
at least one instruction for receiving a list of a plurality of active and compatible applications or widgets compatible with the computing device from a server;
at least one instruction for comparing the received list of the plurality of active and compatible applications or widgets to one or more applications or widgets currently installed on the computing device;
at least one instruction for transmitting to the server a request to download, or enable within a user's locker or profile, one or more listed but not loaded active and compatible applications or widgets;
at least one instruction for receiving the one or more requested active and compatible applications or widgets; and
at least one instruction for deleting one or more currently installed applications or widgets not included in the received list.

10. The computer program product of claim 9, wherein the computer readable storage medium further comprises at least one instruction for establishing a wireless communication link to the server, wherein:
the at least one instruction for receiving the list of one or more active and compatible applications or widgets compatible with the computing device from the server comprises at least one instruction for receiving the list via the established wireless communication link;
the at least one instruction for transmitting to the server the request to download, or enable within the user's locker or profile, the one or more listed but not loaded active and compatible applications or widgets comprises at least one instruction for transmitting the request via the established wireless communication link; and
the at least one instruction for receiving the one or more requested active and compatible applications or widgets comprises at least one instruction for receiving the requested active and compatible applications or widgets via the established wireless communication link.
